# EUROPEAN PATENT SPECIFICATION

(11) **EP 2 505 960 B1**
(45) Date of publication and mention of the grant of the patent: **01.03.2017**
(21) Application number: 12161423.4
(22) Date of filing: 27.03.2012
(51) Int. Cl.: G01B 21/20, G01B 21/32

(54) **Checking positional accuracy of features**
Prüfung der Positionsgenauigkeit von Merkmalen
Vérification de précision de la position de caractéristiques

(30) Priority: 31.03.2011 GB 201105443
(43) Date of publication of application: 03.10.2012
(73) Proprietor: Rolls-Royce plc, London SW1E 6AT (GB)
(72) Inventor: Green, Richard, Bristol, South Gloucestershire BS16 6QN (GB); Annear, Michael, Bristol BS7 0JP (GB)
(74) Representative: Rolls-Royce plc

(56) References cited:
- US-A1- 2010 053 191
- US-A1- 2010 245 843

## Description

This invention relates to a method of checking positional accuracy of features in a flexible component, and is particularly, although not exclusively, concerned with checking features such as holes in components such as gas turbine casings.

Gas turbine casings are examples of components which are prone to distortion, for example under their own weight, when unsupported. This property can cause difficulties when inspecting such components, for example when checking the positional accuracy of an array of features, such as holes, which have been formed in the component in a machining process. Owing to distortion in the component, the holes move relative to their nominal positions with respect to a measurement datum. In order to avoid this problem, the conventional practice is to support the component during the inspection process in a build simulation fixture which holds the component in a nominal configuration, for example, a configuration which it assumes when fastened to another component. Such build simulation fixtures are, of necessity, large, and this causes handling and storage problems. Also, the fixtures need to be massive in order to prevent them from distorting, and they require regular calibration.

US 2010/245843 A1 discloses a method for measuring the roundness profiles moved forward in longitudinal direction inside a rolling mill, using two laser scanners, respectively provided with a light-sensitive sensor and a laser. At least three shadow edges that fit against the round profile to be measured and enclose the round profile to form a polygon are generated and measured and the corresponding tangents are computed. The method includes: a) determining a center in the measuring field prior to the measuring operation; b) determining perpendicular lines from the center to the tangents and measuring the distance from the center to the tangents; c) determining a contour by computing the corner points of the polygon enclosing the round profile; d) positioning a reference circle relative to the contour so that: i) the square shape deviation of the contour relative to this reference circle reaches a minimum; ii) the reference circle represents the smallest possible circle that can fit around the contour, iii) the reference circle represents the largest possible circle that can fit inside the contour; or iv) the reference circle together with a different circle, arranged concentric to the reference circle, encloses the contour with a minimum radial difference; e) computing the diameter of the reference circle and determining from the position in space of the reference center, which represents the center point of the reference circle, and f) computing at least two vectors extending from the reference center to the contour and determining the out-of-roundness from the obtained data.

US 2010/053191 A1 discloses a method and system for computing and displaying a roundness error of an object, which specifies different colors that respectively represents an error range of points. The method and system receives a point cloud of the object and fits a circle based on the point cloud. The method and system computes an error of each point in the point cloud by computing a distance between the each point and the circle, colorizes the points in the point cloud according to the errors and the specified colors, and generates and outputting a graphic roundness error analysis report.

According to the present invention there is provided a method of checking positional accuracy of features in a flexible component in which reference points of the features, in a nominal undeformed condition of the component, lie in nominal positions on a nominal line of predetermined form, the method comprising:
(i) measuring the actual positions of the reference points of the features with the component in a deformed condition;
(ii) generating a base spline passing through the reference point of each feature;
(iii) generating the smoothed spline from the base spline;
(iv) determining the deviation of the reference point of each feature from the smoothed spline;
(v) constructing a base line of the predetermined form and having a length equal to the length of the smoothed spline, the reference points being spaced apart along the base line by the same distances as they are spaced apart along the smoothed spline; and
(vi) determining constrained positions of the reference points of the features which deviate from the base line by the same respective deviations of the reference points from the smoothed spline, the constrained positions of the reference points being manipulated collectively to achieve the best-fit with the nominal positions of the reference points;
(vii) determining the maximum deflection of the component required to transform the smoothed spline into coincidence with the best-fit line; and
(viii) evaluating whether or not the maximum deflection lies within predetermined limits.

The method may also comprise the step of comparing the actual position of the reference point of each feature with a respective nominal position of that reference point after transformation of the best-fit line into coincidence with the nominal line, and evaluating whether or not any deviation between the respective actual and nominal positions of each reference point falls within a respective predetermined positional tolerance.

The predetermined form of the nominal line may be a circle, although other forms may be possible such as straight or curved lines, ellipses or other non-circular closed shapes. The features may be holes in the component, in which case the reference points may be the hole centrelines.

The component may be an annular component, and the features, such as holes, may be provided in a flange of the component.

The constrained positions may be manipulated by translation and/or rotation to achieve a best fit with the nominal hole positions.

If the predetermined form of the nominal line is a circle, a manipulation of the constrained positions may be performed such that, within a group of the reference points of at least some of the features, the maximum positive angular deviation between the respective constrained and nominal positions occurring among those reference points is equal to the maximum negative angular deviation between the constrained and nominal positions occurring among those reference features.

The component may be a casing of a gas turbine engine.

The present invention also provides an apparatus for performing a method as defined above, the apparatus comprising:
i) a coordinate measuring machine for measuring the actual positions of the reference points of the features with the component in a deformed condition; and
ii) processing equipment adapted to
   a) generate a base spline passing through the reference points of each feature;
   b) generate a smoothed spline (8) from the base spline;
   c) determine a deviation of the reference point of each feature from the smoothed spline (8);
   d) construct a base line of the predetermined form and having a length equal to the length of the smoothed spline (8), the reference points being spaced apart along the base line by the same distances as they are spaced apart along the smoothed spline (8);
   e) determine constrained positions of the reference points of the features which deviate from the base line by the same respective deviations of the reference points from the smoothed spline (8), the constrained positions of the reference points being manipulated collectively to achieve the best-fit with the nominal positions of the reference points;
   f) determine the maximum deflection of the component required to transform the smoothed spline into coincidence with the best-fit line; and
   g) evaluate whether or not the maximum deflection lies within predetermined limits.

For a better understanding of the present invention, and to show more clearly how it may be carried into effect, reference will now be made, by way of example, to the accompanying drawings, in which:
Figure 1 represents measured positions of the centrelines of an array of holes in a flange of a gas turbine engine casing;
Figure 2 shows a smoothed spline extending around the array of holes;
Figure 3 is an enlarged view of a region of the smoothed spline Figure 2;
Figure 4 indicates relationships between hole centreline positions and the smoothed spline;
Figure 5 shows a circle onto which the hole centrelines are mapped;
Figure 6 shows the relationship between constrained hole centreline positions and the circle of Figure 5;
Figure 7 represents a transformation to provide a best-fit between the hole centreline positions on the circle of Figure 5 and nominal positions of the hole centrelines; and
Figure 8 represents, in an exaggerated form, the relationship between the smoothed spline of Figure 2 and the best-fit circle following the transformation of Figure 7.

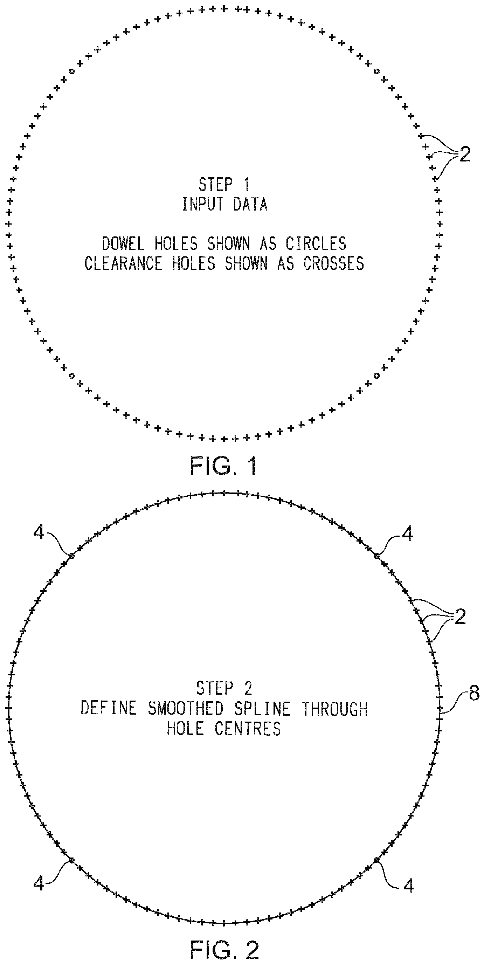

The array of holes shown in Figure 1 comprises clearance holes 2 indicated by crosses, and dowel holes 4 indicated as circles. The holes 2, 4 are formed in a machining operation, performed on the casing, and the casing is subsequently inspected in a CMM process, to determine whether or not it falls within predetermined tolerances. The holes 2, 4 serve to locate the casing with respect to another component of the engine and to receive fasteners to secure the casing to the other component. Consequently, it is important that the holes are accurately positioned. However, although the holes 2, 4 appear to lie on a true circle as seen in Figure 1, the individual holes 2, 4 deviate slightly from the circle owing to the flexibility of the engine casing which causes it to deform when it is unsupported following the machining operation.

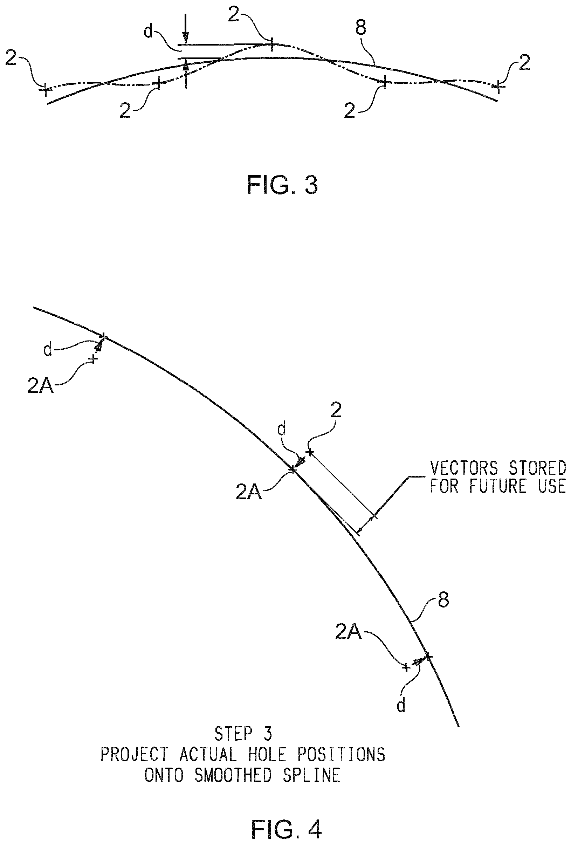

The CMM process creates position data for the centrelines of the holes 2, 4 in the deformed condition of the casing. This position data is supplied to a processor which, as shown in Figure 3, generates a spline 6 which passes precisely through the centrelines of all of the holes 2,4. This spline is then smoothed in the processor to create a smoothed spline 8. In the smoothing process, the line of the spline is moved away from some or all of the hole centrelines. Consequently, the deviations d of the hole positions from the smoothed spline 8 can be regarded as "noise" in the overall hole pattern defined by the smoothed spline 8.

The smoothed spline 8 may be derived by performing a smoothing process on the original spline 6, but alternatively the smoothed spline 8 may be derived from a spigot location diameter based on the positions of the dowel holes 4.

The actual positions of the holes 2, 4 are projected onto the smoothed spline 8 to define projected hole positions 2A, and the individual deviations d of the actual positions of the centrelines of the holes 2,4 from the smoothed spline 8 are then recorded, as indicated in Figure 4.

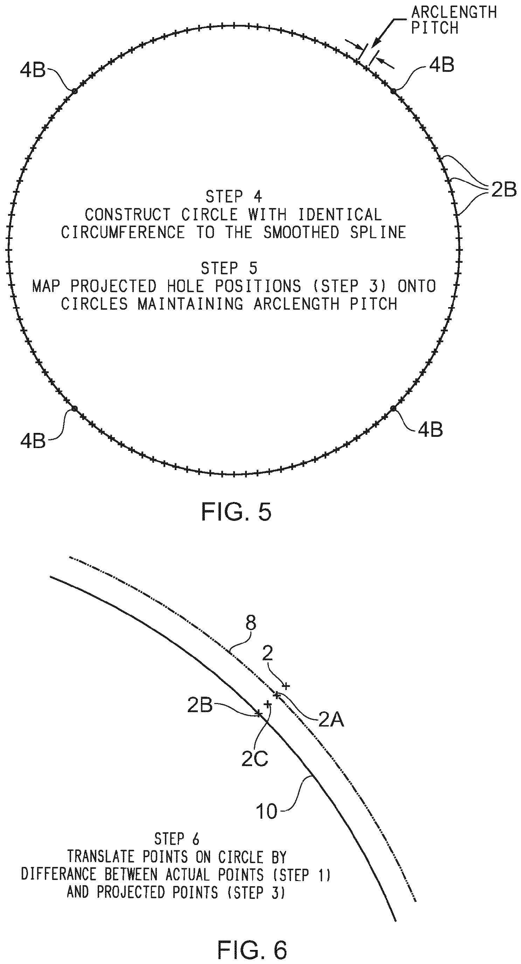

In the next step, as shown in Figure 5, a true circle is generated having a circumference which is identical to the peripheral length of the smoothed spline 8. The projected hole positions 2A on the smoothed spline 8 are mapped onto the circle 10 as projected hole positions 2B so that the distance along the circular arc of the circle 10 between adjacent projected positions is identical, for each respective pair of adjacent holes 2, 4, to the corresponding length along the smoothed spline 8.

Subsequently, as shown in Figure 6, using the deviations d recorded as described with reference to Figure 4, the projected hole positions 2B on the circle 10 are adjusted to establish constrained hole positions 2C. Thus, the deviation d between the actual hole position 2 and the hole position 2A projected on to the smoothed spline 8 is the same as the deviation between the hole position 2B projected on to the circle 10 and the constrained hole position 2C.

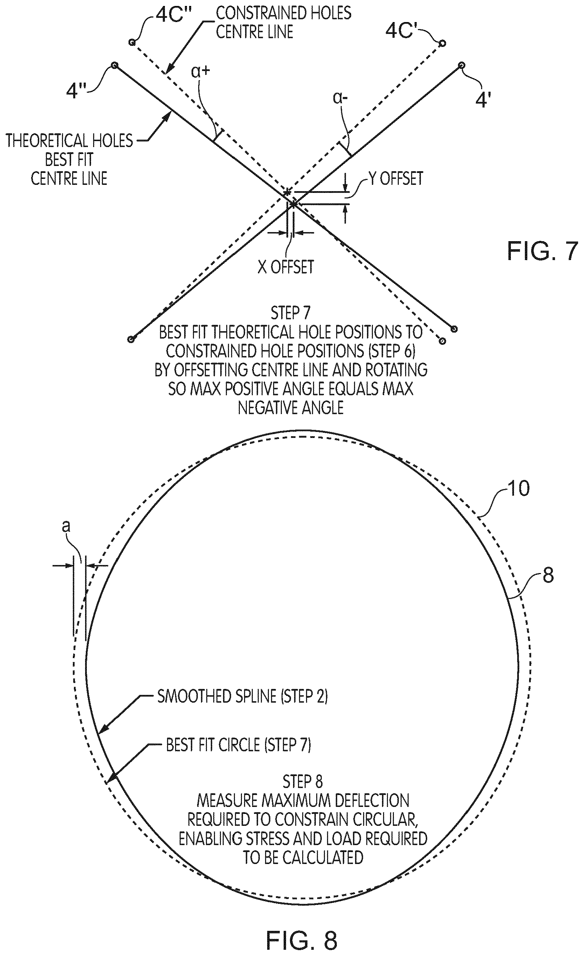

As shown in Figure 7, the circle 10 is then transformed by both translation and rotation to achieve a best-fit between the constrained hole positions 2C, 4C and the nominal or theoretical hole positions 2, 4 derived from drawing data representing the intended form of the component. This transformation results in an offset X,Y as indicated in Figure 7 in the relative positions of the constrained hole positions 2C, 4C and the nominal positions 2, 4, and rotation of the circle 10, with the constrained hole positions 2C, 4C about the centre of the circuit 10 until the maximum positive angle a+ between one respective pair of constrained and nominal hole positions 4C', 4' is equal to the maximum negative angle α- between another respective pair of constrained and nominal hole positions 4C", 4". It will be appreciated that, in the embodiment shown, the dowel holes 4 are used for this purpose, since it is desirable to base the correlation between the arrays of holes on the smoothed spline 8 and the best-fit circle 10 on locations which have a high accuracy requirement. Nevertheless, it is possible to use other groups of the holes 2, 4 to serve as the reference basis for this rotational adjustment.

Figure 8 shows the best-fit circle 10, derived from the step referred to with regard to Figure 7, superimposed on the smoothed spline 8. It will be appreciated that the process described with reference to Figures 1-7 yields the circle 10 which is the best fit of the measured holes 2, 4 of Figure 1 on a true circle. From Figure 8, it is possible to establish the largest deflection a which the component needs to undergo in order to displace the actual positions of the holes 2, 4 as shown in Figure 1 on to the best-fit circle 10. Utilising a 3D model of the component flange, the maximum load and stress are then calculated that would be produced by the required deformation of the flange to bring the smoothed spline 8 into coincidence with the best-fit circle 10. The calculated load and stress are then compared with predetermined values to establish whether or not the required flange deformation can be achieved without overstressing of the flange.

As a further step, actual position errors of the holes 2, 4 with respect to the best-fit circle 10 following the transformation described with reference to Figure 7 can be calculated on the basis of the maximum metal condition as prescribed by detail drawing requirements. This enables the creation of an output in the form of the following table:

| | | | | |
|---|---|---|---|---|
| MAXIMUM DEFLECTION REQUIRED | | | = | 0.32m m |
| LOAD REQUIRED | | | = | 30N |
| MAX STRESS | | | = | 15Mpa |

| ALL HOLES PASS POSITIONAL CHECK | | | | |
|---|---|---|---|---|
| | | | | |

| HOLE NUMBER | ACTUAL ERROR | MAX ERROR | STATUS | |
|---|---|---|---|---|
| 1 | 0.028 | 0.512 | PASSED | |
| ... | ... | ... | ... | |
| ... | ... | ... | ... | |
| ... | ... | ... | ... | |
| 100 | 0.376 | 0.507 | PASSED | |

It will be appreciated that the present invention provides a process by which position errors in features such as holes can be evaluated when measurement of the hole positions is performed while the component is in a deformed condition. Manipulation of the hole data creates a model of the hole array which conforms in shape to the nominal form (i.e. is circular in the embodiment described) while retaining any positioning errors. That model is then compared with a smoothed spline generated from the actual hole positions to determine whether or not the component can be adjusted to return the hole array to its nominal shape without overstressing or overloading the component, and errors in hole position can be determined.

The process may be conducted on a coordinate measurement machine provided with a processor for carrying out the various calculating and transforming steps, without needing to physically support the component in its nominal shape, or its shape when assembled with neighbouring components.

## Claims

1. A method of inspecting a flexible component, the component having features in which reference points of the features, in a nominal undeformed condition of the component, lie in nominal positions on a nominal line of predetermined form, the method comprising:
(i) measuring the actual positions of the reference points (2) of the features with the component in a deformed condition;
(ii) generating a base spline passing through the reference point of each feature;
(iii) generating the smoothed spline (8) from the base spline;
(iv) determining the deviation (d) of the reference point of each feature from the smoothed spline (8);
(v) constructing a base line (10) of the predetermined form and having a length equal to the length of the smoothed spline (8), the reference points being spaced apart along the base line by the same distances as they are spaced apart along the smoothed spline (8); and
(vi) determining constrained positions (2C) of the reference points of the features which deviate from the base line by the same respective deviations (d) of the reference points from the smoothed spline (8), the constrained positions of the reference points being manipulated collectively to achieve the best-fit with the nominal positions of the reference points;
(vii) determining the maximum deflection of the component required to transform the smoothed spline (8) into coincidence with the best-fit line; and
(viii) evaluating whether or not the maximum deflection lies within predetermined limits.

2. A method as claimed in claim 1, further comprising the step of comparing the actual position of the reference point of each feature with a respective nominal position of that reference point after transformation of the smoothed spline (8) into coincidence with the best-fit line, and evaluating whether or not any deviation between the respective actual and nominal positions of each reference point falls within a respective predetermined positional tolerance.

3. A method as claimed in claim 1 or 2, in which the predetermined form of the nominal line is a circle (10).

4. A method as claimed in any one of the preceding claims, in which the features are holes (2, 4) in the component.

5. A method as claimed in claim 4, in which the reference points are the centrelines of the holes (2, 4).

6. A method as claimed in any one of the preceding claims, in which the component is an annular component, and the features are provided in a flange of the component.

7. A method as claimed in claim 1, in which the constrained positions are manipulated by translation and/or rotation.

8. A method as claimed in claim 7 when appendant to claim 3, in which manipulation of the constrained positions is performed such that, within a group of the reference points of at least some of the features, the maximum positive angular deviation between the respective constrained and nominal positions occurring among those reference points is equal to the maximum negative angular deviation between the constrained and nominal positions occurring among those reference features.

9. A method as claimed in any one of the preceding claims, in which the component is a casing of a gas turbine engine.

10. Apparatus for performing a method in accordance with any one of the prec claims, the apparatus comprising:
i) a coordinate measuring machine for measuring the actual positions of the reference points of the features with the component in a deformed condition; and
ii) processing equipment adapted to:
a) generate a base spline passing through the reference points of each feature;
b) generate a smoothed spline (8) from the base spline;
c) determine a deviation of the reference point of each feature from the smoothed spline (8);
d) construct a base line of the predetermined form and having a length equal to the length of the smoothed spline (8), the reference points being spaced apart along the base line by the same distances as they are spaced apart along the smoothed spline (8);
e) determine constrained positions of the reference points of the features which deviate from the base line by the same respective deviations of the reference points from the smoothed spline (8), the constrained positions of the reference points being manipulated collectively to achieve the best-fit with the nominal positions of the reference points;
f) determine the maximum deflection of the component required to transform the smoothed spline (8) into coincidence with the best-fit line; and
g) evaluate whether or not the maximum deflection lies within predetermined limits.

## Patentansprüche

1. Verfahren zum Prüfen einer flexiblen Komponente, wobei die Komponente Merkmale aufweist, wobei Referenzpunkte der Merkmale in einem nominal unverformten Zustand der Komponente in Sollpositionen auf einer nominalen Linie in vorbestimmter Form liegen, wobei das Verfahren Folgendes umfasst:
(i) Messen der Istpositionen der Referenzpunkte (2) der Merkmale mit der Komponente in verformtem Zustand;
(ii) Erzeugen eines Grundspline, der durch den Referenzpunkt jedes Merkmals läuft;
(iii) Erzeugen des geglätteten Spline (8) von dem Grundspline;
(iv) Bestimmen der Abweichung (d) des Referenzpunkts jedes Merkmals von dem geglätteten Spline (8);
(v) Konstruieren einer Basislinie (10) in der vorbestimmten Form und die eine Länge hat, die der Länge des geglätteten Spline entspricht (8), wobei die Referenzpunkte entlang der Basislinie in denselben Abständen voneinander beabstandet sind, wie sie entlang des geglätteten Spline (8) voneinander beabstandet sind; und
(vi) Bestimmen eingeschränkter Positionen (2C) der Referenzpunkte der Merkmale, die von der Basislinie durch die gleichen entsprechenden Abweichungen (d) der Referenzpunkte von dem geglätteten Spline (8) abweichen, wobei die eingeschränkten Positionen der Referenzpunkte gemeinsam manipuliert werden, um die beste Anpassung an die Sollpositionen der Referenzpunkte zu erreichen;
(vii) Bestimmen der maximalen Auslenkung der Komponente, die dazu benötigt wird, den geglätteten Spline (8) in Übereinstimmung mit der bestangepassten Linie zu transformieren; und
(viii) Bewerten, ob die maximale Auslenkung innerhalb der vorbestimmten Grenzen liegt.

2. Verfahren nach Anspruch 1, ferner umfassend den Schritt des Vergleichens der Istposition des Referenzpunkts jedes Merkmals mit einer entsprechenden Sollposition des Referenzpunkts nach der Transformation des geglätteten Spline (8) in Übereinstimmung mit der bestangepassten Linie und Bewerten, ob Abweichungen zwischen den entsprechenden Ist- und Sollpositionen jedes Referenzpunkts in eine entsprechende vorbestimmte Lagetoleranz fallen,

3. Verfahren nach Anspruch 1 oder 2, wobei die vorbestimmte Form der nominalen Linie ein Kreis (10) ist.

4. Verfahren nach einem der vorangehenden Ansprüche, wobei die Merkmale Löcher (2, 4) in der Komponente sind.

5. Verfahren nach Anspruch 4, wobei die Referenzpunkte die Mittellinien der Löcher sind (2, 4).

6. Verfahren nach einem der vorangehenden Ansprüche, wobei die Komponente eine ringförmige Komponente ist und die Merkmale in einem Flansch der Komponente bereitgestellt sind.

7. Verfahren nach Anspruch 1, wobei die eingeschränkten Positionen durch Translation und / oder Drehung manipuliert werden.

8. Verfahren nach Anspruch 7, in der Rückbeziehung auf Anspruch 3, wobei die Manipulation der eingeschränkten Positionen so durchgeführt wird, dass, innerhalb einer Gruppe der Referenzpunkte von mindestens einem der Merkmale, die maximale positive Winkelabweichung zwischen der entsprechender eingeschränkten Position und der Sollposition, die unter diesen Referenzpunkten auftreten, gleich der maximalen negativen Winkelabweichung zwischen der eingeschränkten Position und der Sollposition ist, die unter diesen Referenzmerkmalen auftreten.

9. Verfahren nach einem der vorangehenden Ansprüche, wobei die Komponente ein Gehäuse eines Gasturbinentriebwerks ist.

10. Vorrichtung zum Durchführen eines Verfahrens nach einem der vorangehenden Ansprüche, wobei die Vorrichtung Folgendes umfasst:
i) ein Koordinatenmessgerät zum Messen der Istpositionen der Referenzpunkte der Merkmale mit der Komponente in verformtem Zustand; und
ii) ein Verarbeitungsgerät, das dazu angepasst ist:
a) einen Grundspline zu erzeugen, der durch die Referenzpunkte jedes Merkmals läuft;
b) einen geglätteten Spline (8) von dem Grundspline zu erzeugen;
c) eine Abweichung des Referenzpunkts jedes Merkmals von dem geglätteten Spline (8) zu bestimmen;
d) eine Basislinie der vorbestimmten Form zu konstruieren, die eine Länge hat, die der Länge des geglätteten Spline entspricht (8), wobei die Referenzpunkte entlang der Basislinie in denselben Abständen voneinander beabstandet sind, wie sie entlang des geglätteten Spline (8) voneinander beabstandet sind;
e) eingeschränkte Positionen der Referenzpunkte der Merkmale zu bestimmen, die von der Basislinie durch die gleichen entsprechenden Abweichungen der Referenzpunkte von dem geglätteten Spline (8) abweichen, wobei die eingeschränkten Positionen der Referenzpunkte gemeinsam manipuliert werden, um die beste Anpassung an die Sollpositionen der Referenzpunkte zu erreichen;
f) die maximale Auslenkung der Komponente zu bestimmen, die dazu benötigt wird, den geglätteten Spline (8) in Übereinstimmung mit der bestangepassten Linie zu übertragen; und
g) zu bewerten, ob die maximale Auslenkung innerhalb der vorbestimmten Grenzen liegt.

## Revendications

1. Méthode d'inspection d'un composant flexible, le composant possédant des éléments dans lesquels des points de référence des éléments, dans un état non déformé nominal du composant, se trouvent dans des positions nominales sur une ligne nominale de forme prédéterminée, la méthode comprenant :
(i) mesurer les emplacements effectifs des points de référence (2) des éléments avec le composant à l'état déformé ;
(ii) produire une cannelure de base passant à travers le point de référence de chaque élément ;
(iii) réaliser la cannelure lissée (8) à partir de la cannelure de base ;
(iv) déterminer l'écart (d) du point de référence de chaque élément depuis la cannelure lissée (8) ;
(v) former une ligne de base (10) de la forme prédéterminée, dont la longueur est égale à la longueur de la cannelure lissée (8), les points de référence étant espacés le long de la ligne de base par les mêmes distances qui les séparent le long de la cannelure lissée (8) ; et
(vi) déterminer des positions restreintes (2C) des points de référence des éléments qui dévient de la ligne de base des mêmes écarts (d) correspondants des points de référence depuis la cannelure lissée (8), les positions restreintes des points de référence étant manipulées collectivement pour réaliser l'ajustement optimal avec les positions nominales des points de référence ;
(vii) déterminer la déformation maximale du composant, nécessaire pour transformer la cannelure lissée (8) afin qu'elle coïncide avec la ligne d'ajustement optimal ; et
(viii) évaluer si la déformation maximale est comprise, ou non, dans des limites prédéterminées.

2. Méthode selon la revendication 1, comprenant en outre l'étape de comparaison de la position effective du point de référence de chaque élément avec une position nominale correspondante de ce point de référence après la transformation de la cannelure lissée (8) afin qu'elle coïncide avec la ligne d'ajustement optimal, et l'étape consistant à évaluer si tout écart entre les positions effectives et nominales correspondantes de chaque point de référence est compris, ou non, dans une tolérance de positionnement prédéterminée correspondante.

3. Méthode selon la revendication 1 ou 2, dans laquelle la forme prédéterminée de la ligne nominale est un cercle (10).

4. Méthode selon une des revendications précédentes, dans laquelle les éléments sont des trous (2, 4) dans le composant.

5. Méthode selon la revendication 4, dans laquelle les points de référence sont les axes des trous (2, 4).

6. Méthode selon une des revendications précédentes, dans laquelle le composant est un composant annulaire, et les éléments sont situés dans une bride du composant.

7. Méthode selon la revendication 1, dans laquelle les positions restreintes sont manipulées par translation et/ou rotation.

8. Méthode selon la revendication 7, lorsqu'elle est jointe à la revendication 3, dans laquelle la manipulation des positions restreintes est effectuée de sorte qu'au sein d'un groupe des points de référence d'au moins certains des éléments, l'écart angulaire positif maximum entre les positions restreintes et nominales correspondantes survenant entre ces points de référence est égal à l'écart angulaire négatif maximum entre les positions restreintes et nominales survenant entre ces éléments de référence.

9. Méthode selon une quelconque des revendications précédentes, dans laquelle le composant est un carter d'un moteur à turbine à gaz.

10. Appareil pour l'exécution d'une méthode selon une quelconque des revendications précédentes, l'appareil comprenant :
i) une machine de mesure des coordonnées pour mesurer les positions effectives des points de référence des éléments du composant à l'état déformé ; et
ii) un équipement de traitement adapté pour :
a) produire une cannelure de base passant à travers les points de référence de chaque élément ;
b) réaliser une cannelure lissée (8) à partir de la cannelure de base ;
c) déterminer un écart du point de référence de chaque élément depuis la cannelure lissée (8) ;
d) former une ligne de base de la forme prédéterminée, dont la longueur est égale à la longueur de la cannelure lissée (8), les points de référence étant espacés le long de la ligne de base par les mêmes distances qui les séparent le long de la cannelure lissée (8) ;
e) déterminer des positions restreintes des points de référence des éléments qui dévient de la ligne de base des mêmes écarts correspondants des points de référence depuis la cannelure lissée (8), les positions restreintes des points de référence étant manipulées collectivement pour réaliser l'ajustement optimal avec les positions nominales des points de référence ;
f) déterminer la déformation maximale du composant nécessaire pour transformer la cannelure lissée (8) afin qu'elle coïncide avec la ligne d'ajustement optimal ; et
g) évaluer si la déformation maximale est comprise, ou non, dans des limites prédéterminées.
